Europäisches Patentamt

European Patent Office

Office européen des brevets

(11) Publication number: **0 235 437**
**A1**

## EUROPEAN PATENT APPLICATION

(21) Application number: **86307472.0**

(22) Date of filing: **29.09.86**

(51) Int. Cl.⁴: **B67D 1/12** , F16K 11/10

(30) Priority: **28.09.85 GB 8523969**

(43) Date of publication of application:
**09.09.87 Bulletin 87/37**

(84) Designated Contracting States:
**AT BE CH DE FR GB IT LI LU NL SE**

(71) Applicant: **Whitford, John**
**Norvoc 27 Loggans Road**
**Hayle Cornwall(GB)**
Applicant: **Penryn Building Co. a partnership**
**of Jenkin, David William, Chinn, Marylin**
**10 Broad Street**
**Penryn, Cornwall(GB)**

(72) Inventor: **Whitford, John**
**Norvoc, 27 Loggans Road**
**Hayle Cornwall(GB)**

(74) Representative: **Bryer, Kenneth Robert**
**K.R. Bryer & Co. 1 Strangways Villas**
**Truro Cornwall TR1 2PA(GB)**

(54) **A fluid control valve.**

(57) An automatic changeover valve (25) for auto-
matically changing over a liquid source such as a
keg (11,12) in a beer delivery system, upon exhaus-
tion of the liquid from one source. the automatic
changeover valve (25) has a liquid-controlling spool
valve the spindle (37) of which is controlled by
pistons (33,34) the position of which is determined
by gas pressure from a gas pressure source (15).
Two sets of gas control valves are provided, in pairs,
one of which communicates via a membrane (55,56)
with a respective chamber (53,54) in communication
with the liquid, and the other of which (69,70) con-
trols the discharge of gas or the delivery of gas to a
piston chamber (44,47) to control the position of the
pistons (33,34) and therefore, the routing through the
valve by the spool valve spindle (37).

FIG 1

## A Fluid Control Valve

The present invention relates to a fluid control valve and to a system incorporating a fluid control valve, particularly, but not exclusively, for the control of a liquid by means of gas pressure differentials.

The present invention will be particularly described in relation to an application in a liquid dispensing system which can be used to dispense beverages such as beer, cider or the like under pressure from a container or keg to a dispensing point remote from the container. It is conventional for such beverages to be stored in barrels or kegs in a cellar or other room remote from the bar or lounge where the beverage is dispensed. One of the problems encountered in the dispensing of such beverages from pressurised containers results from this physical separation of the storage and dispensing locations, and arises when a barrel or keg becomes empty and a new keg has to be fitted to the delivery line. Because of the pressures to which such kegs are subject in use they are made from strong and opaque material so that the quantity remaining in the keg cannot be determined visually. If the keg should become exhausted during a busy period it is necessary for the barman or other supervisor to leave the bar or dispensing point and physically exchange the empty keg for a full one from a store of such full kegs in the cellar. The absence of the barman from the dispensing point for the time taken to manoeuvre a new keg into position and to make the necessary connections both to the beer delivery line and to the fluid pressure source, usually a carbon dioxide container is a considerable disadvantage both from the point of view of security of premises and the inconvenience. Moreover, manhandling the full kegs requires some considerable strength so that lady assistants can rarely be employed to perform this task.

To solve this problem various attempts have been made to devise a system allowing one keg to be exchanged for another when the first becomes empty, by acting solely at the bar on a suitable control valve. Conventional pneumatic or hydraulic systems, however, require at least three and possibly four pipelines between the bar and the cellar in order to be able to effect the necessary control of the liquid delivery system so as to exchange one keg for another. Further, such distance involves complex three port and five port valves, and an additional problem is thus encountered due to the nature of the liquid concerned, since beer and other alcoholic beverages react with the neoprene seals conventionally used in pneumatic and hydraulic control circuits causing these eventually to clog or gum, thereby jamming the valve or valves and rendering them inoperable or inoperative. Further, the design of such hydraulic or pneumatic circuits has to accommodate the possibility of frequent flushing operations necessary to prevent the build up of unwanted bacteria since beer acts as an ideal host medium for the growth of such cultures.

Because the cellar may be some distance from the dispensing point the cost of supplying and installing the additional pipelines required for such conventional hydraulic or pneumatic systems, even if the problem of valve jamming could be overcome, is very considerable, and the present invention seeks to provide a system by which the interchange of kegs can be effected automatically with a minimum of pipework and, particularly, no requirement for any additional pipelines whatsoever between the cellar and the dispensing point other than the beer delivery line itself.

According to one aspect of the present invention, therefore, there is provided a valve for a liquid delivery system having at least two inlets connectable to respective liquid sources and a single outlet, and valve shutter means for selectively interconnecting one of the said two inlets with the said outlet, there being provided means for detecting when a liquid source becomes exhausted, whereby to commute the valve shutter means so as to interconnect the other of the said two inlets with the said outlet.

The present invention comprehends a valve for a liquid delivery system in which a pressurising gas is utilised to effect commutation of the liquid delivery route, and the gas and liquid are kept separated from one another in the valve.

In one embodiment the valve comprises a spool valve with pistons at each of two opposite ends for control movements to be effected under the gas pressure, such control movements effecting commutation of the liquid delivery route.

The present invention also comprehends a liquid delivery system comprising two or more containers for liquid, a source of compressed gas, a delivery pipeline extending to the dispensing point and an automatic control valve operable to provide communication between a first of the containers and the dispensing valve whilst liquid remains in the first container, and operating automatically to commute to provide communication between the second container and the dispensing valve when the liquid in the first container is exhausted.

One embodiment of the present invention will now be more particularly described, by way of example, with reference to the accompanying drawings, in which:

Figure 1 is a schematic circuit diagram of a beer dispensing system incorporating a valve in accordance with the principles of the present invention;

Figure 2 is a longitudinal sectional view through a valve formed as an embodiment of the invention taken on the line II-II of Figure 3.

Figure 3 is a longitudinal sectional view through the valve of Figure 2, taken on the line III-III of Figure 2; and

Figure 4 is a sectional view through a float valve connected in line with two of the points of the valve shown in Figures 2 and 3.

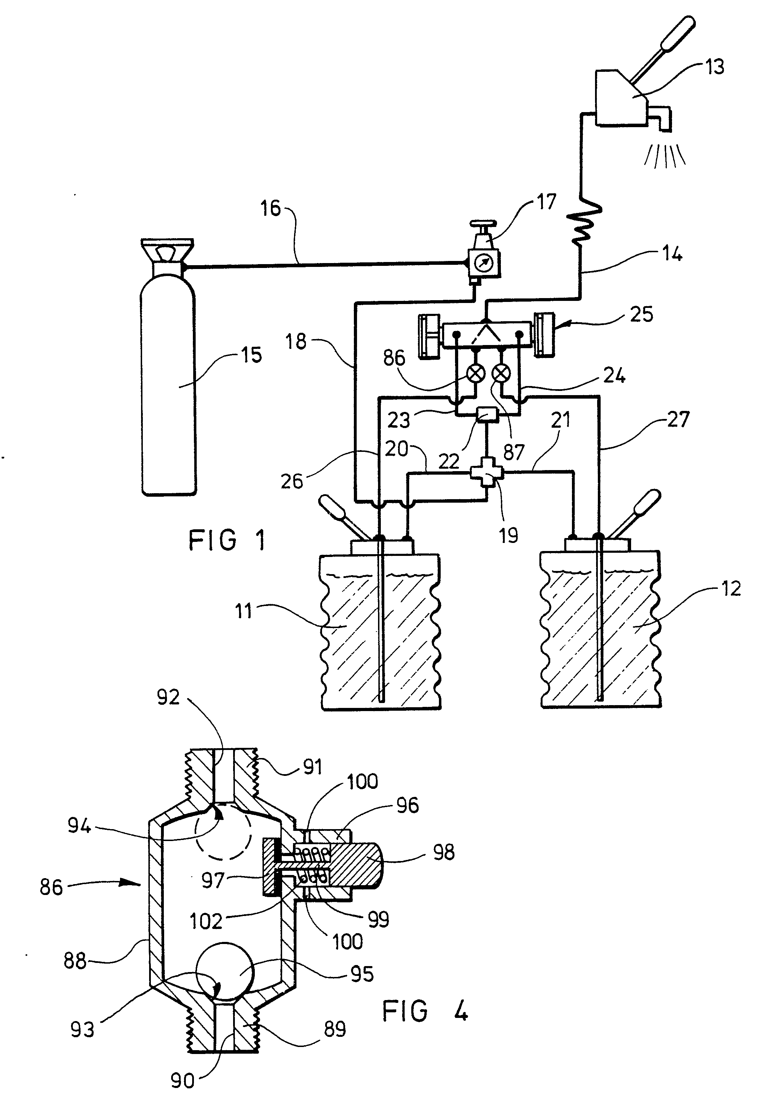

Referring first to Figure 1 the diagram shown illustrates two beer kegs 11, 12 containing beer for delivery to a dispensing tap 13 which, as is conventional practice, would be located in a bar or lounge remote from the cellar housing the kegs 11, 12, and connected thereto by a liquid delivery line 14. The kegs 11, 12 are pressurised by a gas under pressure, usually carbon dioxide, from a gas cylinder 15 delivering through a line 16 and a pressure regulating valve 17 the outlet from which is connected by a line 18 to 4-way union 19 two outlet lines 20, 21 from which lead directly to the kegs 11, 12 and the other outlet line from which leads to a 2-way union 22 and from there via two branch lines 23, 24 to the automatic control valve of the invention, which is identified with the reference numeral 25. The kegs 11, 12 each have respective beer delivery pipes 26, 27 which are connected via valve unions 86, 87 to respective inlets of the valve 25, and the outlet from the valve 25 is connected to the beer dispensing line 14 leading to the dispensing tap 13.

Broadly, the operation of the control valve 25 is to provide intercommunication between one of the kegs 11, 12 and the dispensing tap 13 whilst liquid is contained within the keg, allowing it to be drawn off through the tap 13 under the pressure exerted by the gas in the cylinder 15 which is delivered via the delivery line 16, the pressure regulator 17, the line 18 and one of the two branch pressure lines 20, 21 to each cylinder. It will be appreciated, therefore, that the pressures in the cylinders 11, 12 is identical during normal delivery and balanced not only with one another, but with the pressure delivered via the union 22 and the two branch pressure lines 23, 24 to the control valve 25.

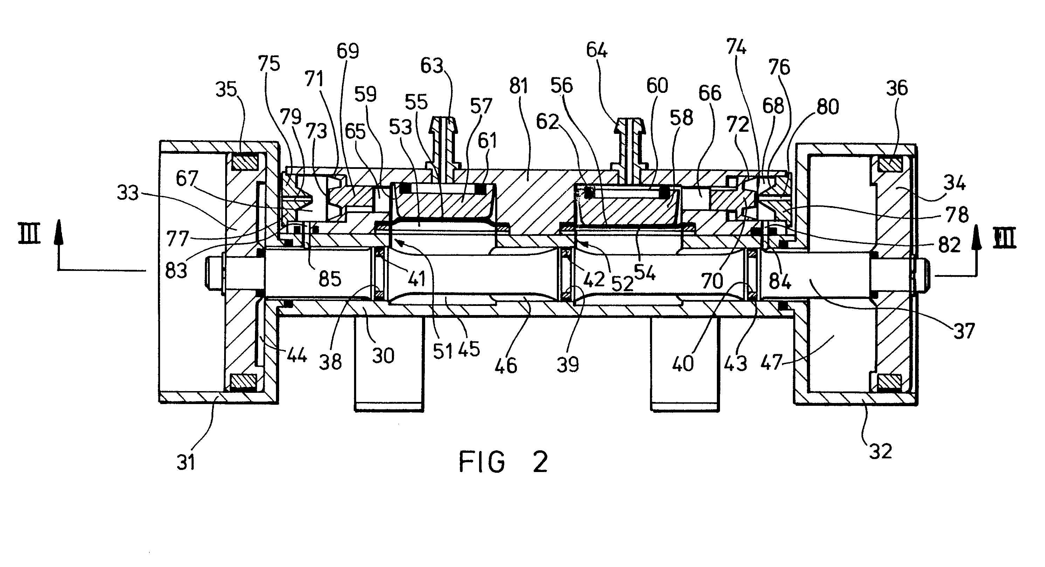

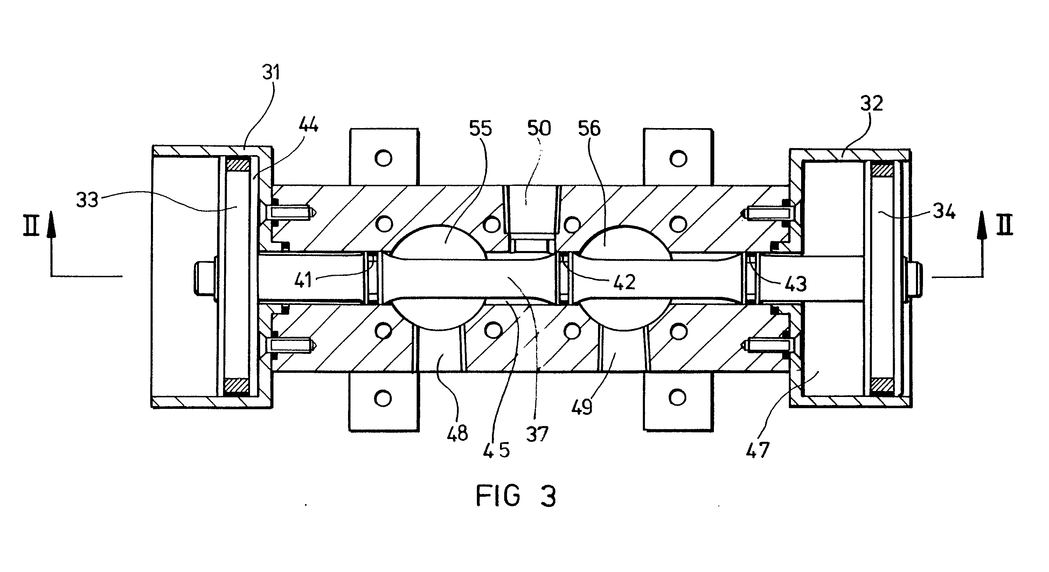

Referring now to Figures 2 and 3, the construction of the control valve is shown in greater detail. This valve comprises a main spool valve body 30 in the form of an elongate cylinder having enlarged cylindrical end portions 31, 32. The end portions 31, 32 of the cylinder house respective pistons 33, 34 having respective annular seals 35, 36 with the interior walls of the cylinder portions 31, 32 and carried on opposite ends of a common spool valve spindle 37 having three annular grooves 38, 39, 40 spaced along its length, with the groove 39 located at mid point of the spindle 37 and the grooves 38 and 40 spaced equally on either side of it. Each of the grooves 38, 29, 40 houses an annular seal 41, 42, 43 so that the bore within the cylinder 30 is separated into four chambers, a first chamber 44 at the left hand end of the spindle 37 and the left seal 41, which chamber also extends into the enlarged end portion 31 of the cylinder, and is bounded by the piston 33; a left inner chamber 45 between the left seal 41 and the middle seal 42; a right inner chamber 46 between the middle seal 42 and the right seal 43; and a right outer chamber 47 between the right seal 43 and the right hand end piston 34, also of course extending into the cylindrical end portion 32. Between the seals 41, 42 and 43 the spindle 37 is of reduced diameter and the ends of the portions of reduced diameter are smoothly rounded to avoid the formation of sharp corners which may harbour bacteria, and to ensure a smooth flow of liquid through the valve.

The cylindrical wall of the cylinder 30 is also formed with five ports comprising a first liquid inlet port 48, a second liquid inlet port 49, an outlet port 50, a first pressure transfer port 51, and a second pressure transfer port 52. The pressure transfer ports 51, 52 communicate with liquid pressure chambers 53, 54 which are closed on one wall by respective membranes 55, 56. The ports 51, 52 are of substantially the same cross-sectional area as the chambers 53, 54 again to ensure that there are no regions which could harbour bacteria. Each of the membranes 55, 56 carries a respective valve shutter 57, 58 located within a respective chamber 59, 60 and carrying a respective annular seal 61, 62 each of which surrounds the facing end of an inlet gas union 63, 64 to which the two branch gas delivery pipes 23, 24 of Figure 1 are connected.

The chambers 59, 60 lead via axial transfer passages 65, 66 to respective valve chambers 67, 68 housing respective secondary valve shutters 69, 70. The valve chambers 67, 68 are cylindrical and the valve shutters 69, 70 have respective annular lips 71, 72 which slide within the cylindrical bores of the chambers 67, 68.

The central body of each valve shutter 69, 70 has a conical portion 73, 74 facing a correspondingly shaped conical portion 75, 76 of respective end closures 77, 78 each of which has a central passage 79, 80.

The chambers 59, 60 and 67, 68 are all formed in a gas valve body 81 which is attached to the spool valve housing 30 which has respective transverse passages 82, 83 in alignment with transverse passages 84, 85 in the side wall of the housing 30, the passages 83, 85 allowing communication between the chamber 67 in the gas valve assembly and the left hand spool valve chamber 44, whilst the two aligned passages 82, 84 allow communication between the gas valve chamber 68 and the right hand spool valve chamber 47.

The gas valve body 81 fits between the enlarged piston chambers 31, 32 and its ends are spaced slightly from these chambers so that the passages 79, 80 in the end caps 77, 78 can communicate with the atmosphere.

When the automatic control valve 25 is connected in a circuit such as that illustrated in Figure 1 the ports 48, 49 illustrated merely as openings in Figure 3, are connected by means of valve unions, such as that illustrated in Figure 4, to the beer delivery lines 26, 27 from respective kegs 11, 12. The outlet port 50, again shown merely as an aperture in Figure 2, is connected by means of a suitable plain union (not shown) to the delivery line 14 leading to the dispensing valve 13 in the bar.

As can be seen in Figure 4 the valve union 86 comprises a cylindrical body 88 having a threaded spigot 89 at one end, through which passes an aperture 90 communicating with the interior of the cylindrical body 88, and at the other end a similar threaded spigot 91 having an internal passage 92 communicating with the interior of the cylindrical body 88. At the inner end of the passages 90, 92 in the spigots 89, 91 there are formed respective chamferred valve seats 93, 94 for receiving a shutter ball 95.

The valve union 86 is intended to be mounted in the orientation illustrated in Figure 4 with the connector spigot 91 located vertically above (or substantially vertically above) the spigot union 89. The valve shutter ball 95 is a buoyant hollow body which will float in a liquid such as that intended to be dispensed by the automatic changeover valve of the present invention.

Near the upper end of the cylindrical body 88 is a transverse tubular branch 96 communicating with the interior of the cylindrical body 88 and closed by a valve 97 linked to a plunger 98 by a stem 99. A spring 102 compressed between the plunger 98 and a shoulder at the inner end of the branch 96 ensures that the plunger 98 is resiliently urged outwardly and the valve shutter 97 is pressed against the opening in the side wall of the cylindrical body 88 to maintain the valve closed in normal conditions. The branch 96 has two lateral openings 100 the purpose of which will be explained below.

The keg change valve and beer dispensing circuit described hereinabove with reference to Figure 1 to 3 operate as follows. It is assumed that in the initial conditions both the kegs 11, 12 are full and the valve is set up as illustrated in Figure 2 with the pistons 33, 34 and spindle 37 being located in the right hand position so that the inlet port 48 connected to the beer delivery line 26 communicates with the outlet port 50 and the beer delivery line 27 leading from the keg 12 to the inlet port 49 is shut off from communication with the outlet port 80 by the central seal 42 so that upon opening of the dispensing valve 13 beer will be driven, under pressure from the carbon dioxide cylinder 15, arriving at the keg 11 through the line 16, the pressure regulator valve 17, the line 18, the union 19 and the line 20. Beer will thus pass upwardly through the beer delivery line 26 through the valve union 86 into the left inner chamber 45 through the port 48 and from there out through the port 50 into the delivery line 14 and thence to the tap 13.

The valve union 86 is mounted in the orientation illustrated in Figure 4 with the threaded spigot 89 screwed into the port 48 (the changeover valve being orientated suitably for this purpose) and the delivery line 26 being connected by suitable connector means to the spigot 91 so that, in use, beer flows from the line 26 through the passage 92 and downwardly through the interior chamber 101 within the cylindrical body 88 of the valve union, and out through the passage 90 in the spigot 89 to enter into the changeover valve 25. Since the shutter ball 95 is buoyant it will thus float in these circumstances into contact with the valve seat 94 as illustrated in broken outline in Figure 4, and will permit the downward flow of liquid whilst resisting any reverse flow. This situation will continue as long as there is beer in the keg 11, and in these circumstances the liquid pressure chamber 53 contains liquid at the same pressure as the two kegs 11, 12 and the membrane 55 is stressed upwardly to press the valve shutter 57 and annular seal 61 against the cooperating face of the valve housing 81 closing communication between the union 63 and the transfer passage 65 so that the valve shutter 69 is free within the chamber 67 and the passage 79 permits communication between the atmosphere, the chamber 67, the ports 83 and 85 and the right outer spool valve chamber 44. At the same time, although the liquid pressure chamber 54 is also at the same pressure as that within the keg 12 the membrane 56 is stressed downwardly and the valve shutter 58 and annular seal 62 spaced from the wall surrounding the union 64 allowing communication between the branch gas delivery type 24 and the chamber 68 via the chamber 60 in the transfer passage 66, with the valve shutter 70 being displaced to the right so that its conical tip 74 closes the mouth of the passage 80 in the end cap 78 whilst gas under pressure can pass around the lip seal 72 into the chamber 68 which is in communication via the ports 82, 84 with the right outer spool valve chamber 47 thereby urging the piston 34 to the right and maintaining the three valve seals 41, 42, 43 in the relative positions illustrated in Figures 2 and 3.

When the keg 11 becomes exhausted the last of the liquid passing along the line 26 when the tap 13 is opened will arrive at the valve union 86. As the liquid gas interface passes down through the valve chamber 101 the buoyant valve shutter ball 95 will float down onto the lower valve seat 93 closing the passage 90 through the spigot 89 and cutting off the passages downstream of this point from communications with the pressure source. These downstream passages immediately fall to atmospheric pressure therefore (it being remembered that the tap 13 is open) and this momentary fall in pressure causes an imbalance across the membrane 55 because the chamber 53 is in communication through the passage 51 with the chamber 45 now at atmospheric pressure. The valve shutter 57 is thus able to be displaced by the pressure in the chamber 59 arriving through the union 63 from the gas delivery line 23 and when the annular seal 61 becomes displaced from the wall of the valve housing 81 gas pressure can pass through the transfer passage 65 to displace the left hand secondary valve shutter 69 to the left so that its conical tip 73 closes the mouth of the discharge passage 79 and, at the same time gas under pressure can pass around the lip 75 into the chamber 67 from where its escape through the discharged passage 79 is prevented by the closure of the conical tip 73 of the valve shutter 69, but its passage through the ports 83, 85 to the left outer spool valve chamber 44 is open. Pressurisation of this chamber gives rise to pressure increase acting against the piston 33 urging it to the left. The momentary fall in pressure in the chamber 45 also causes a momentary and slight fall in pressure in the chamber 60 above the valve shutter 58, this being communicated as a transient via the branch line 23, the union 22 and the branch line 24. The pressure in the right inner spool valve chamber 46 is maintained, however, due to the compressed gas in the keg 12. This momentary pressure differential allows the membrane 56 to be displaced to close the valve shutter 58 thereby releasing the pressure on the secondary valve shutter 70 so that this can be displaced from the passage 80 by the pressure trapped in the right outer chamber 47 allowing gas to excape from this chamber 47 to atmosphere through the ports 82, 84 and the discharge passage 68. This reduces the pressure acting on the right hand piston 34 allowing it to be displaced by the tension in the spindle 37 exerted by the piston 33 which is newly experiencing a rise in pressure through the ports 83, 85, the chamber 35 and the transfer passage 65. The two pistons 33, 34 thus move to the left so that the central seal 42 on the spindle 37 is displaced from its position to the right of the outlet port 50 to a new position to the left of the outlet port 50 allowing communication between the inlet port 49 which is connected to the delivery line 27 leading from the keg 12 and the outlet port 50 leading to the delivery line 14 and the valve 13. The valve now remains in this commuted position as long as the pressure in the keg 12 remains sufficient. Visual indication of the commutation of the valve is provided by the positions of the pistons 33, 34 in their cylinders 31, 32 which are open ended, as well as by the position of the ball shutter 95 in the valve union 86, which has now fallen to the bottom of the chamber 101, and a routine check of this valve will indicate when and which keg required to be changed.

It will be appreciated, of course, that with this system it is not possible simply to disconnect the exhausted keg 11 to allow the beer to continue being dispensed from the keg 12 since the line 20 from the union 19 is still pressurised and consequently it is necessary to close the pressure regulator 17 to isolate the pressure source 15 from the kegs 11, 12 to allow disconnection of the keg 11 and connection of a new, full keg in its place. It is conventional for the kegs to be provided with uni-directional valves so that the charge of carbon dioxide within the exhausted keg 11 will not escape on disconnection of line 20 from its coupling with the keg 11, this being recovered subsequently for re-use or exhausted safely at the brewery when the keg is refilled. After a new keg has been connected in place of keg 11 and the regulator 17 re-opened, it is merely necessary to depress the plunger 98 of the valve union 86 to allow the air or gas trapped in the lines to be exhausted through the discharge ports 100 as beer is driven through line 26 from the new keg. When beer arrives in the chamber 101 the ball shutter 95 will float to the top and the plunger 98 can then be released. If this procedure is followed the changeover of kegs is barely noticeable at the tap 13 as there is a scarcely perceptible momentary drop in delivery pressure as the valve commutes.

## Claims

1. A valve for a liquid delivery system characterised by having at least two inlets (48,49) connectable to respective liquid sources (11,12) and a single outlet (50), and valve shutter means (37) for selectively interconnecting one of the said two inlets (48,49) with the said outlet (50), there being provided means (86,55,56) for detecting when a liquid source (11,12) becomes exhausted, whereby to commute the valve shutter means (37) so as to interconnect the other of the said two inlets (48,49) with the said outlet (50).

2. A valve according to Claim 1, characterised in that the said means (86,55,56) for detecting the exhaustion of the liquid source (11,12) is sensitive to a liquid/gas interface at a point upstream of the valve shutter means (37).

3. A valve according to Claim 1 or Claim 2, characterised in that the means (86,55,56) for detecting exhaustion of a liquid source is sensitive to a pressure differential between an inlet (48,49) and the outlet (50) above a certain threshold value.

4. A valve according to any preceding Claim, characterised in that the liquid path through the valve (25) is controlled by a spool valve (37) having at least one control piston (33,34) the position of which is determined by gas pressure directed into a piston chamber (44,47) by gas valves - (57,58,69,70) sensitive to a pressure differential in the valve between a pressure source (11,12) and a delivery outlet (13) thereof.

5. A valve according to Claim 4, characterised in that the said gas valves (57,58,69,70) include a primary gas (57,58) valve having a diaphragm - (55,56) separating a chamber (53,54) with gas on one side of the diaphragm and the liquid on the other.

6. A valve according to Claim 4 or Claim 5, characterised in that the gas valves (57,58,69,70) include a secondary gas valve (69,70) in communication with the piston chamber (44,47) of the piston (33,34) determining the position of the spool valve (37).

7. A valve according to any of Claim 4 to 6, characterised in that there are provided two pistons (33,34), one at each end of a spool valve spindle - (37), each piston (33,34) being housed in a respective piston chamber (44,47) to which gas under pressure can be directed by one of two sets of primary and secondary gas valves (57,58,69,70), a first set (57,69) of which is provided to control the flow of gas from a gas pressure source (11,12) to a first of the piston chambers (44), and a second set (58,70) of which is provided to control the flow of gas from the gas pressure source (11,12) to the second piston chamber (47).

8. A valve according to any preceding Claim, characterised in that each liquid inlet (44,49) has an associated float valve (86,87) operable to allow the flow of liquid into the valve (25), but to close the associated inlet (48,49) from a pressurised supply source against the flow of gas into the associated inlet (48,49).

9. A valve according to Claim 8, characterised in that the float valve (86,87) associated with at least one inlet (48,49) has a transparent body (88) whereby the position of a buoyant valve shutter member (95) within the float valve (86,87) is visible from the outside.

10. A valve according to Claim 8 or claim 9, in which the float valve or valves (86,87) have gas discharge ports (100) with manually operable control valves (97,98) allowing the selective exhaust of gas through the float valve (86,87) upon operation of the manually operable discharge valve (97,98).

11. A liquid delivery system incorporating a gas pressure source, at least two liquid sources, and an automatic changeover valve according to any preceding Claim.

0 235 437

FIG 1

FIG 4

FIG 2

FIG 3

## EUROPEAN SEARCH REPORT

**European Patent Office**

| | DOCUMENTS CONSIDERED TO BE RELEVANT | | EP 86307472.0 |
|---|---|---|---|

| Category | Citation of document with indication, where appropriate, of relevant passages | Relevant to claim | CLASSIFICATION OF THE APPLICATION (Int Cl 4) |
|---|---|---|---|
| A | US - A - 4 014 461 (HARVILL)<br>* Totality *<br>-- | 1,2,11 | B 67 D 1/12<br>F 16 K 11/10 |
| A | AU - B - 61 016/80 (THE COCA-COLA-COMP.)<br>* Fig. 1,2,4 *<br>-- | 1,11 | |
| A | DE - B2 - 2 459 857 (WABCO WESTING-HOUSE GMBH)<br>* Fig. 1 *<br>-- | 1,4,7 | |
| A | US - A - 3 825 027 (HENDERSON)<br>* Totality *<br>---- | 1,9,11 | |

TECHNICAL FIELDS
SEARCHED (Int. Cl 4)

F 16 K 11/00
F 16 K 31/00
B 67 D 1/00

The present search report has been drawn up for all claims

| Place of search | Date of completion of the search | Examiner |
|---|---|---|
| VIENNA | 14-05-1987 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82